# EUROPEAN PATENT APPLICATION

(11) **EP 1 933 538 A1**
(43) Date of publication of application: **18.06.2008**
(21) Application number: 07253521.4
(22) Date of filing: 06.09.2007
(51) Int. Cl.: H04M 1/02

(54) **Sliding mechanism and portable electronic device using the same**

(30) Priority: 15.12.2006 CN 200610157546
(71) Applicant: Sutech Trading Limited, Tortola (VG)
(72) Inventor: Ho, Po-Feng c/o Hon Hai Precision Industry Co., Ltd., Tu-cheng City Taipei Hsien (TW)
(74) Representative: Stuttard, Garry Philip

(57) **Abstract**

A sliding-type mechanism (100) for use in a portable electronic device (400) is provided. In one embodiment the sliding-type mechanism (100) includes a base plate, a slidable plate and a linkage module. The slidable plate is slidably connected to the base plaza. The linkage module is positioned between the base plate and the slidable plate and connects the base plate and the slidable plate. The linkage module includes a tint and second torsion springs and each torsion spring includes a plurality of spring coils. The first and second torsion springs arc configured to drive the slidable plate to slide along the base plate when the slidable plate moves a predetermined range along the base plate.

## Description

### BACKGROUND OF THE INVENTION

### 1. Field of the Invention

The present invention generally relates to a sliding-type mechanism and, more particularly, to a sliding-type mechanism having at least one torsion spring and a portable electronic device using the same.

### 2. Description of Prior Art

A typical mobile phone terminal provides wireless communication services to its subscriber while wirelessly communicating with its base station. Rapid development in the field of information and telecommunication technologies has made it possible for mobile users to use a variety of functions and types of mobile phone terminals available on the market. Generally, these mobile phone terminals can be classified into three or more types of terminals including bar-type terminals, flip-type terminals, and foldable terminals.

As more diverse design concepts are introduced into the design of mobile phone terminals, sliding-type mobile phone terminals have also come into widespread use. A sliding-type mobile phone terminal includes two housings and a sliding-type mechanism. The sliding-type mechanism is used to drive one housing to slidably move on the other housing in an opened state or a closed state.

The conventional sliding-type mechanism has proven complex and difficult in manufacturing/assembly. Moreover, the conventional sliding-type mechanism usually includes adaptable elastic members, such as torsion springs with relatively small sizes for fitting within a relative small size of the mobile phone terminal. The torsion springs function to slide one housing of the sliding type mobile terminal over the other housing thereof. The torsion springs may have insufficient driving force and be prone to metal fatigue owing to their relatively small size. Users may therefore feel some inconvenience in which they have to manually slide one housing over the other housing as there is a lack of sufficient driving force.

A typical solution to the aforementioned shortcomings is to use torsion springs with a relative bigger size and more spring coils. However, this inevitably increases the size of the mobile phone terminal.

Therefore, a heretofore-unaddressed need exists in the art to address the aforementioned deficiencies and inadequacies.

### SUMMARY OF THE INVENTION

In one aspect, the present invention relates to a sliding-type mechanism for use in a portable electronic device. The sliding-type mechanism includes a base plate, a slidable plate and a linkage module. The slidable plate is slidably engaged with the base plate. The linkage module is positioned between the base plate and the slidable plate and engaged with the base plate and the slidable plate. The linkage module includes a first and second torsion springs. Each torsion spring has a first end portion and a second end portion and a plurality of spring coils formed therebetween. In one embodiment, each of the first and second end portions of each torsion spring has a hook structure. The plurality of spring coils of each torsion spring is formed spaced-evenly between the first end portion and second end portion of the torsion spring and arranged in a zigzag form. Each spring coil is formed in a ring form. The first and second torsion springs are configured to drive the slidable plate so as to slide along the base plate when the slidable plate moves a predetermined range of along the base plate. In one embodiment, each torsion spring is made of a durable material including a metal such as SWP-B and/or SUS301.

In one embodiment, the base plate has a first side portion and an opposite, second side portion defining a base plate body therebetween, a first guide rail formed on the first side portion and a parallel, second guide rail formed on the second side portion, the base plate body defining a first and second mounting holes therein. The slidable plate has a first side portion and an opposite, second side portion defining a slidable plate body therebetween, a first guide groove formed on the first side portion and a parallel, second guide groove formed on the second side portion, the slidable plate body defining a first and second mounting holes therein. The first guide groove and the second guide groove are configured to receive the first guide rail and the second guide rail, respectively, of the base plate such that as assembled, the slidable plate is slidably movable back and forth along the first and second guide rails of the base plate.

As assembled, the first and second end portions of the first torsion spring are mounted onto the base plate and the slidable plate by the first pair of mounting members passing through the hook structures of the first and second end portions of the first torsion spring and the first mounting holes in the base plate and the slidable plate, respectively, and the first and second end portions of the second torsion spring are mounted onto the base plate and the slidable plate by the second pair of mounting members passing through the hook structures of the first and second end portions of the second torsion spring and the second mounting holes in the base plate and the slidable plate, respectively.

In another aspect, the present invention relates to a portable electronic device. In one embodiment, the portable electronic device includes a first housing, a second housing, and the sliding-type mechanism as disclosed above. The second housing is slidably connected with the first housing. The sliding-type mechanism is configured to drive the second housing to slide relative to the first housing.

In yet another aspect, the present invention relates to a sliding-type mechanism for providing a force to drive a first plate engaged with a second plate to slidably move back and forth on the second plate. In one embodiment, the sliding-type mechanism has a first torsion spring and a second torsion spring. Each torsion spring has a first end portion, a second end portion and a plurality of spring coils formed therebetween. The first and second end portions of each torsion spring are attached to the first and second plates at predetermined positions, respectively. The first torsion spring and the second torsion spring are configured to drive the first plate to slide along the second plate when the first plate moves a predetermined range along the second plate.

These and other aspects of the present invention will become more apparent from the following detailed description of the preferred embodiments taken in conjunction with the accompanying drawings, although variations and modifications therein may, be affected without departing from the spirit and scope of the novel concepts of the disclosure.

### BRIEF DESCRIPTION OF THE DRAWINGS

Many aspects of the sliding-type mechanism and a portable electronic device using the same can be better understood with reference to the following drawings. These drawings are not necessarily drawn to scale, the emphasis instead being placed upon clearly illustrating the principles of the sliding-type mechanism and the portable electronic device using the same according to the present invention. Moreover, in the drawings like reference numerals designate corresponding parts throughout the several views. Wherever possible, the same reference numbers are used throughout the drawings to refer to the same or like elements of an embodiment, and wherein:

FIG. 1 shows schematically a perspective view of a mobile phone terminal incorporating a sliding-type mechanism according to one embodiment of the present invention, showing an essentially completely opened state of the mobile phone terminal;

FIG 2 shows schematically a perspective view of the sliding-type mechanism shown in FIG. 1;

FIG. 3 is an exploding view of the sliding-type mechanism shown in FIG. 2;

FIG. 4 is a front view of the sliding-type mechanism shown in FIG. 2 in an opened state of the mobile phone terminal; and

FIGS. 5 is another front view of the sliding-type mechanism shown in FIG. 2 in a closed state of the mobile phone terminal.

### DETAILED DESCRIPTION OF THE INVENTION

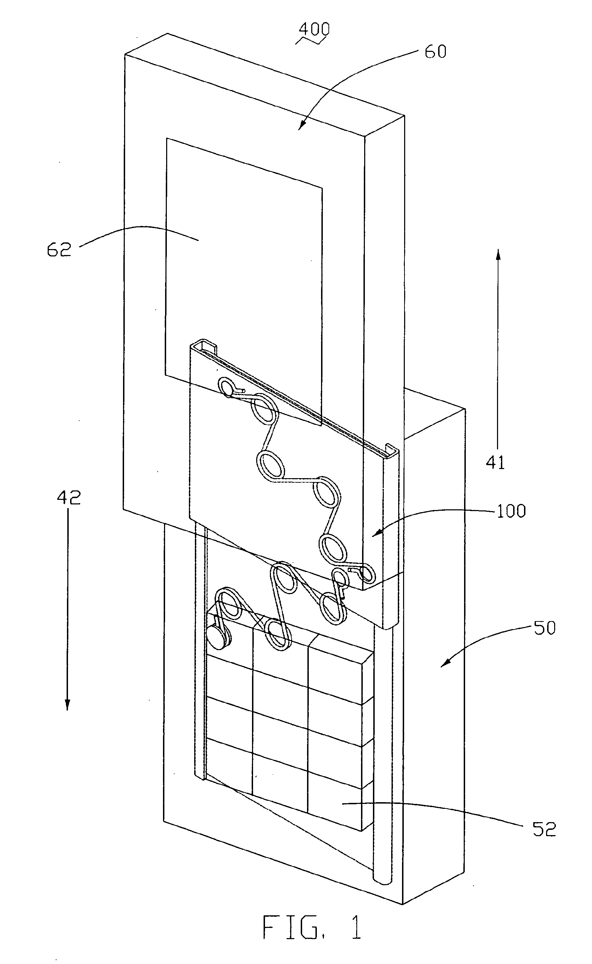

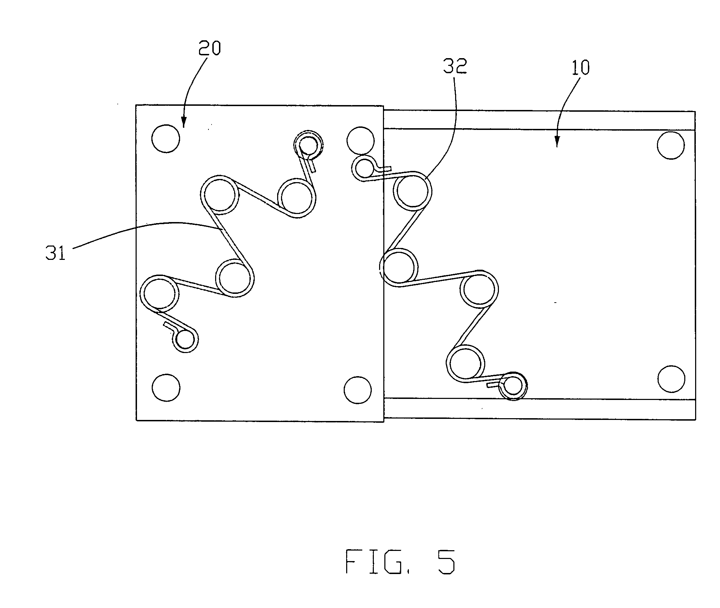

The description will be made as to the embodiments of the present invention in conjunction with the accompanying drawings in FIGS. 1-5. In accordance with the purposes of this invention, as embodied and broadly described herein, this invention, in one aspect, relates to a sliding-type mechanism. The sliding-type mechanism is usable in a portable electronic device such as a mobile phone terminal, a digital camera, and so on.

Referring to FIG. 1, a mobile phone terminal 400 having a sliding-type mechanism 100 is shown according to one embodiment of the present invention. The mobile phone terminal 400 includes a first housing 50, a second housing 60 facing the first housing 50, and a sliding-type mechanism 100. The sliding-type mechanism 100 is positioned between and engaged with the first housing 50 and the second housing 60 such that the second housing 60 is slidably movable relative to the first housing 50. The first housing 50 has a keypad section 52 facing toward the second housing 60, and the second housing 60 includes a display unit 62 placed on the exterior surface thereof. When the mobile phone terminal 400 is in a closed state, the keypad section 52 is covered and protected within the second housing 60. The sliding-type mechanism 100 is configured to enable the second housing 60 to slide along the first housing 50, exposing the keypad section 52 and making it available for use. In this case, the mobile phone terminal 400 is in an opened state.

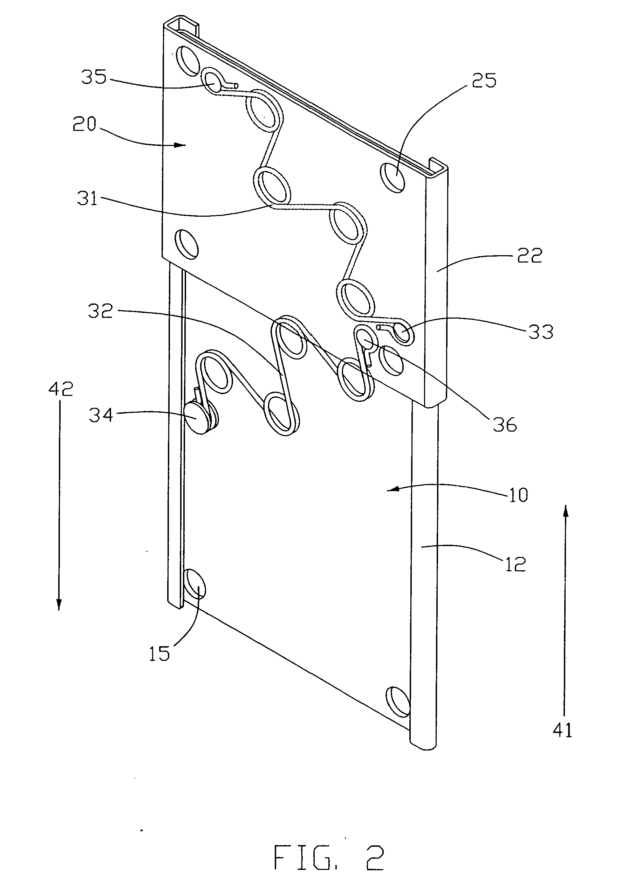

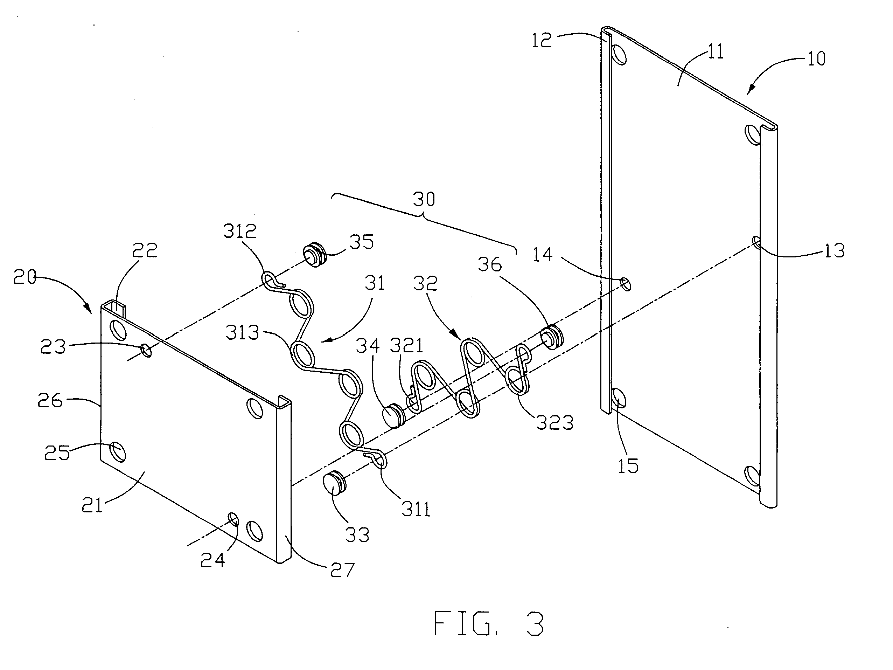

Referring in general to FIGS. 2 and 3, the sliding-type mechanism 100 includes a base plate 10, a slidable plate 20, and a linkage module 30. The linkage module 30 is positioned between and engaged with the base plate 10 and the slidable plate 20. The linkage module 30 is adapted for providing a force to drive the slidable plate 20 to slide back and forth along the base plate 10 smoothly. The base plate 10 is fixed to the first housing 50 of the mobile phone terminal 400, and the slidable plate 20 is attached to the second housing 60 of the mobile phone terminal 400.

Referring now to FIG 3 in detail, the base plate 10 of the sliding-type mechanism 100 in this exemplary embodiment is a rectangular plate and has a first side portion 16 and an opposite, second side portion 17 defining a main body 11 therebetween. The base plate 10 also has a first and second guide rails 12 respectively extending from the first and second side portions 16 and 17. The main body 11 has a first mounting hole 13, a second mounting hole 14 and a plurality of fixing holes 15 defined therethrough at predetermined positions, respectively. The first and second mounting holes 13 and 14 each is preferably a hole with a threaded interior surface. The first and second mounting holes 13 and 14 are adapted for securing the linkage module 30 to the base plate 10. The first and second mounting holes 13 and 14 are formed in the first and second side portions 16 and 17 of the main body 11, respectively, and preferably, proximate to corresponding guide rails 12. The positions of the first and second mounting holes 13 and 14 and a distance defined therebetween may vary with a specific structure and performance of the linkage module 30 and a stroke of the slidable plate 20 relative to the base plate 10. The plurality of fixing holes 15 in the base plate 10 is used to fix the base plate 10 to the first housing 50 of the mobile phone terminal 400. Each of the plurality of fixing holes 15 is preferably a hole with a threaded interior surface. In this embodiment, the plurality of fixing holes 15 has four holes, each located proximate to a corresponding corner of the main body 11 of the base plate 10.

In this exemplary embodiment, the slidable plate 20 of the sliding-type mechanism 100 is a rectangular sheet-shaped plate. The slidable plate 20 includes a first side portion 26 and a second side portion 27 defining a main portion 21 therebetween. Each of the first and second side portions 26 and 27 has a guide groove 22 formed therein for receiving a corresponding guide rail 12 of the base plate 10. As assembled, the two guide grooves 22 of the slidable plate 20 receive their corresponding guide rails 12 of the base plate 10 such that the slidable plate 20 is slidable back and forth along the base plate 10. The main body 21 of the slidable plate 20 also has a first mounting hole 23, a second mounting hole 24 and a plurality of fixing holes 25 defined therethrough at predetermined positions, respectively. The first and second mounting holes 23 and 24 are preferably a hole with a threaded interior surface. Each of the first mounting hole 23 and the second mounting hole 24 is positioned diagonally and proximately to a corresponding corner of the main portion 21. The plurality of fixing holes 25 is used to fix the slidable plate 20 to the second housing 60 of the mobile phone terminal 400. Each of the plurality of fixing holes 25 is preferably a hole with a threaded interior surface. In this example, the plurality of second fixing holes 25 has four holes, each located proximate to a corresponding corner of the main body 21 of the slidable plate 20.

The linkage module 30 includes a first torsion spring 31, a second torsion spring 32, and a first to fourth mounting members 33-36. The first torsion spring 31 includes a first hooked end 311 and a second hooked end 312 and a plurality of spring coils 313 formed therebetween. The number of spring coils 313 of the first torsion spring 31 is preferably four, and each spring coil 313 is preferably formed with only one ring. The four first spring coils 313 are arranged evenly between the first hooked end 311 and the second hooked end 312, preferably, in a zigzag form. As assembled, the first hooked end 311 of the first torsion spring 31 is attached to the base plate 10 by passing the first mounting member 33 through the first hooked end 311 of the first torsion spring 31 and the first mounting hole 13 in the base plate 10 and securing them therein. The second hooked end 312 of the first torsion spring 31 is attached to the slidable plate 20 by passing the third mounting member 35 through the second hooked end 312 of the first torsion spring 31 and the first mounting hole 23 in the slidable plate 20 and securing them thereto.

The second torsion spring 32 has a structure similar to that of the first torsion spring 31. The second torsion spring 32 includes a first and a second hooked ends 321, 322 and a plurality of spring coils 323 formed therebetween. The number of spring coils 323 of the second torsion spring 31 is preferably four, and each spring coil 323 is preferably formed with only one ring. The four first spring coils 323 of the second torsion spring 32 are arranged space-evenly between the first hooked end 321 and the second hooked end 322, preferably, in a zigzag form. As assembled, the first hooked end 321 of the second torsion spring 32 is attached to the base plate 10 by passing the second mounting member 34 through the first hooked end 321 of the second torsion spring 32 and the second mounting hole 14 in the base plate 10 and securing them therein. The second hooked end 322 of the second torsion spring 32 is attached to the slidable plate 20 by passing the fourth mounting member 36 through the second hooked end 322 of the second torsion spring 32 and the second mounting hole 24 in the slidable plate 20 and securing them thereto.

Each torsion spring 31 or 32 is made of a durable material including metal such as SWP-B and/or SUS301. Each of the first to fourth mounting members 33-36 is identical or different, and preferably a screw. The first to fourth mounting members 33-36 are preferably made of a durable material including metal and/or plastic.

Referring back to FIG. 2, in assembly of the sliding-type mechanism 100, the first hooked end 311 of the first torsion spring 31 is positioned over the first mounting hole 13 of the base plate 10. Then, the first mounting structure 33 is threaded into the first hooked end 311 of the first torsion spring 31 and the first mounting hole 13 of the base plate 10 so as to fix the first hooked end 311 of the first torsion spring 31 to the base plate 10 in a position where the first mounting hole 13 is located. In this case, the second hooked end 312 of the first torsion spring 31 is positioned proximate to one fixing hole 15 of the base plate 10 that is apart from the second mounting hole 14 of the base plate 10. The first hooked end 321 of the second torsion spring 32 is positioned over the second mounting hole 14 of the base plate 10. Then the second mounting structure 34 is threaded into the first hooked end 321 of the second torsion spring 32 and the second mounting hole 14 of the base plate 10 so as to fix the first hooked end 321 of the second torsion spring 32 to the base plate 10 in a position where the second mounting hole 14 is located. Meantime, the second hooked end 322 of the second torsion spring 32 is positioned proximate to the first mounting hole 13 of the base plate 10.

Next, the slidable plate 20 of the sliding-type mechanism 100 is attached to the base plate 10 by means of placing the two guide rails 12 of the base plate 10 into their respective guide grooves 22 of the slidable plate 20. By sliding the slidable plate 20 on the base pate 10 back and forth, the second mounting hole 24 of the slidable plate 20 is aligned with the second hooked end 322 of the second torsion spring 32. Then, the second torsion spring 32 is attached firmly to the slidable plate 20 with the fourth mounting member 36 threaded into the second hooked end 322 of the second torsion spring 32 and the second mounting hole 24 of the slidable plate 20. Then, the slidable plate 20 is further moved and aligned such that the second hooked end 312 of the first torsion spring 31 is positioned to the first mounting hole 23 of the slidable plate 20. At this stage, the second torsion spring 32 is slightly compressed. By threading the third mounting structure 35 into the first mounting hole 23 the slidable plate 20 and then the second hooked end 312 of the first torsion spring 31, the second hooked end 312 of the first torsion spring 31 is attached firmly to the slidable plate 20. Accordingly, the first torsion spring 31 is slightly compressed. Therefore, the biased first and second torsion spring 31 and 32 cause the slidable plate 20 to move in an adverse direction till the slidable plate 20 is balanced/stopped relative to the base plate 10.

After that, the first and second housings 50 and 60 of the mobile phone terminal 400 are secured to the base and slidable plates 10, 20 via the fixing holes 15 and 25 therein, respectively. For such an arrangement, the second housing 60 is capable of moving over the first housing 50 along a first (opening) direction 41 or a reversed, second (closing) direction 42. Both the opening and closing directions 41 and 42 are substantially parallel to the guide rail 12 of the base plate 10. When the second housing 60 is moving along the opening direction 41, the mobile phone terminal 400 is movable to an opened state, where the second housing 60 is displaced relative to the first housing 50 and the keypad section 52 is exposed, as shown in FIG 1. When the second housing 60 is moving along the closing direction 42, the mobile phone terminal 400 is movable to an closed state, where the second housing 60 is overlapped with the first housing 50 to cover the keypad section 52 thereof (not shown).

In closing of the mobile phone terminal 400, i.e., switching it from the opened state to the closed state, referring to FIGS.1, 4 and 5, an external force along the closing direction 42 is applied to the second housing 60 to push it downwardly relative to the first housing 50. Accordingly, the slidable plate 20 is moved downwardly over the base plate 10 along the closing direction 42. During this process, the first and second torsion springs 31 and 32 are cooperatively compressed gradually and each torsion spring 31 or 32 accumulates an increasing amount of elastic potential energy. When the slidable plate 20 moves a specific distance where the first and second torsion springs 31 and 32 are positioned perpendicularly to the guide rails 12 of the base plate 10, the elastic potential energy of the first and second torsion springs 31 and 32 reaches a maximum value. At this stage, the slidable plate 20 stops moving if no external force is applied to the slidable plate 20. If a substantially small amount of a force along the closing direction 42 is applied to the slidable plate 20 to move it forwards, the accumulated elastic potential energy is released in a form of elastic force along the closing direction 42, the elastic force pushes the slidable plate 20 to slide freely on the guide rails 12 of the base plate 10 along the closing direction 42. The slidable plate 20 is finally stopped and positioned at a specific place where the second housing 60 covers the first housing 50 and the mobile phone terminal 400 is in the closed state. In this case, the slidable plate 20 is rebalanced via the first and second torsion springs 31 and 32.

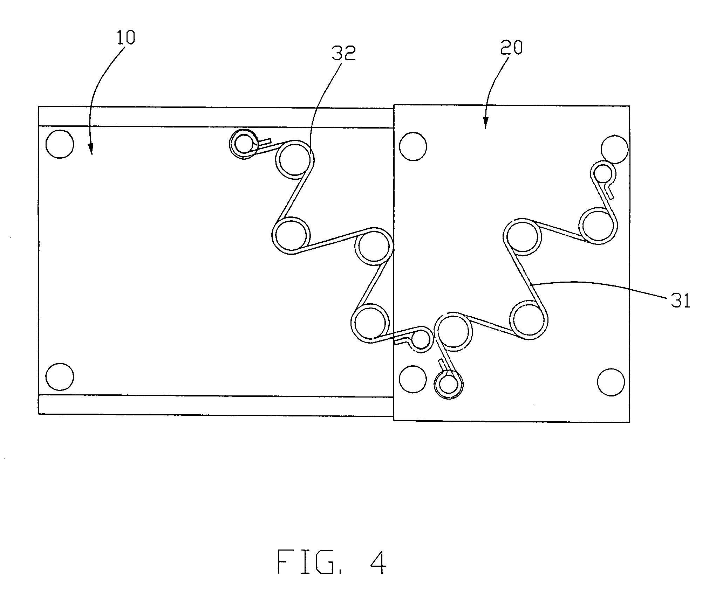

In opening of the mobile phone terminal 400, i.e., switching it from the closing state to the opened state, an external force along the opening direction 41 is applied to the second housing 60 to push it upwardly relative to the first housing 50. Accordingly, the slidable plate 20 is moved upwardly over the base plate 10 along the opening direction 41. During this process, the first and second torsion springs 31 and 32 are cooperatively biased/compressed gradually and each torsion springs 31 or 32 accumulates an increasing amount of elastic potential energy. When the slidable plate 20 moves a specific distance of which the first and second torsion springs 31 and 32 are positioned perpendicularly to the guide rail 12 of the base plate 10, the elastic potential energy of the first and second torsion springs 31 and 32 reaches a maximum value. At this stage, the slidable plate 20 stops moving if no external force is applied to the slidable plate 20. If a substantially small amount of a force along the opening direction 41 is applied to the slidable plate 20 to move it forwards, the elastic potential energy is released in a form of elastic force along the opening direction 41, the elastic force pushes the slidable plate 20 to slide freely on the guide rails 12 of the base plate 10 along the opening direction 41. The slidable plate 20 is finally stopped and displaced from the base plate 10 as shown in FIG. 4 and the mobile phone terminal 400 is in the opened state with the keypad section 52 thereof being exposed. In this case, the slidable plate 20 is rebalanced via the first and second torsion springs 31 and 32.

According to the present invention, the sliding-type mechanism 100 and therefore the mobile phone terminal 400 have many advantages over a conventional sliding-type mechanism and a mobile phone terminal of using the conventional sliding-type mechanism. The first and second torsion springs 31 and 32 satisfy a small size requirement for the mobile phone terminal 400. Each torsion spring 31 or 32 is provided with at least four spring coils 313 and 323 providing a sufficient driving force to drive the slidable plate 20 to slide back and forth on the base plate 10, so as to allow a user to open or close the mobile phone terminal 400 with greater ease and more convenience. Furthermore, during the closing or opening of the sliding-type mechanism 100, the elastic potential energy used to drive the slidable plate 20 is evenly distributed over each spring coil 313 and 323. Thus, each spring coil 313 or 323 has sufficient fatigue strength and can thus have a long working life. Moreover, only two torsion springs 31 and 32 and four mounting structures 33-36 cooperatively are utilized to form the linkage module 30 interconnecting the slidable plate 20 and the base plate 10. The linkage module 30 is therefore cost saving, and easily assembled. The sliding-type mechanism can also be used in other portable electronic devices.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

## Claims

1. A sliding-type mechanism, comprising:
a. a base plate;
b. a slidable plate slidably engaged with the base plate; and
c. a linkage module positioned between and engaged with the base plate and the slidable plate, the linkage module comprising a first torsion spring and a second torsion spring, each torsion spring having a first end portion, a second end portion and a plurality of spring coils formed therebetween, the first and second torsion springs configured to provide a force to drive the slidable plate to slide along the base plate as the slidable plate moves in a predetermined range along the base plate.

2. The sliding-type mechanism as claimed in claim 1, wherein the base plate has a first side portion and an opposite, second side portion defining a base plate body therebetween, a first guide rail formed on the first side portion and a parallel, second guide rail formed on the second side portion, the base plate body defining a first and second mounting holes therein.

3. The sliding-type mechanism as claimed in claim 2, wherein the slidable plate has a first side portion and an opposite, second side portion defining a slidable plate body therebetween, a first guide groove formed on the first side portion and a parallel, second guide groove formed on the second side portion, the slidable plate body defining a first and second mounting holes therein, wherein the first guide groove and the second guide groove are configured to receive the first guide rail and the second guide rail, respectively, of the base plate such that as assembled, the slidable plate is slidably movable back and forth along the first and second guide rails of the base plate.

4. The sliding-type mechanism as claimed in claim 3, wherein each of the first and second end portions of each torsion spring has a hook structure.

5. The sliding-type mechanism as claimed in claim 4, wherein the linkage module further has a first and second pairs of mounting members.

6. The sliding-type mechanism as claimed in claim 5, wherein as assembled, the first and second end portions of the first torsion spring are mounted onto the base plate and the slidable plate by the first pair of mounting members passing through the hook structures of the first and second end portions of the first torsion spring and the first mounting holes in the base plate and the slidable plate, respectively, and the first and second end portions of the second torsion spring are mounted onto the base plate and the slidable plate by the second pair of mounting members passing through the hook structures of the first and second end portions of the second torsion spring and the second mounting holes in the base plate and the slidable plate, respectively.

7. The sliding-type mechanism as claimed in claim 1, wherein the plurality of spring coils of each torsion spring is formed spaced-evenly between the first end portion and second end portion of the torsion spring, and wherein each spring coil is formed in a ring form.

8. The sliding-type mechanism as claimed in claim 7, wherein the plurality of spring coils of each torsion spring is arranged in a zigzag form.

9. The sliding-type mechanism as claimed in claim 1, wherein the number of the plurality of spring coils of each torsion spring is four.

10. The sliding-type mechanism as claimed in claim 1, wherein each torsion spring is made of a durable material including a metal.

11. The sliding-type mechanism as claimed in claim 10, wherein the metal comprises SWP-B and/or SUS301.

12. A portable electronic device comprising at least one sliding-type mechanism as claimed in claim 1, wherein the portable electronic device further comprises a first housing and a second housing, and wherein the at least one sliding-type mechanism engaged with the first and second housings and configured to drive the second housing to slide relative to the first housing.

13. A portable electronic device, comprising:
a. a first housing;
b. a second housing; and
c. a sliding-type mechanism engaged with the first and second housings and configured to drive the second housing to slide relative to the first housing,
wherein the sliding-type mechanism comprises:
(i). a base plate;
(ii). a slidable plate being slidably engaged with the base plate; and
(iii). a linkage module positioned between and engaged with the base plate and the slidable plate, the linkage module comprises a first torsion spring and a second torsion spring, each torsion spring having a first end portion, a second end portion and a plurality of spring coils formed therebetween, the first and second torsion springs configured to provide a force to drive the slidable plate to slide along the base plate when the slidable plate moves in a predetermined range along the base plate.

14. The portable electronic device as claimed in claim 13, wherein the base plate has a first side portion and an opposite, second side portion defining a base plate body therebetween, a first guide rail formed on the first side portion and a parallel, second guide rail formed on the second side portion, respectively, the base plate body defining a first and second mounting holes therein.

15. The portable electronic device as claimed in claim 14, wherein the slidable plate has a first side portion and an opposite, second side portion defining a slidable plate body therebetween, a first guide groove formed on the first side portion and a parallel, second guide groove formed on the second side portion, the slidable plate body defining a first and second mounting holes therein, wherein the first guide groove and the second guide groove are structured to receive the first guide rail and the second guide rail, respectively, of the base plate such that as assembled, the slidable plate is slidably movable back and forth along the first and second guide rails of the base plate.

16. The portable electronic device as claimed in claim 15, wherein each of the first and second end portions of each torsion spring has a hook structure.

17. The portable electronic device as claimed in claim 16, wherein the linkage module further has a first and second pairs of mounting members.

18. The portable electronic device as claimed in claim 17, wherein as assembled, the first and second end portions of the first torsion spring are mounted onto the base plate and the slidable plate by the first pair of mounting members passing through the hook structures of the first and second end portions of the first torsion spring and the first mounting holes in the base plate and the slidable plate, respectively, and the first and second end portions of the second torsion spring are mounted onto the base plate and the slidable plate by the second pair of mounting members passing through the hook structures of the first and second end portions of the second torsion spring and the second mounting holes in the base plate and the slidable plate, respectively.

19. The portable electronic device as claimed in claim 13, wherein the plurality of spring coils of each torsion spring is formed spaced-evenly between the first end portion and second end portion of the torsion spring, and wherein each spring coil is formed in a ring form.

20. The portable electronic device as claimed in claim 13, wherein the plurality of spring coils of each torsion spring is arranged in a zigzag form.

21. The portable electronic device as claimed in claim 13, wherein the number of the plurality of spring coils of each torsion spring is four.

22. The portable electronic device as claimed in claim 13, wherein each torsion spring is made of a durable material including a metal.

23. The portable electronic device as claimed in claim 22, wherein the metal comprises SWP-B and/or SUS301.

24. The portable electronic device as claimed in claim 13, wherein the first housing and the second housing are attached onto the base plate and the slidable plate, respectively.

25. A sliding-type mechanism for providing a force to drive a first plate engaged with a second plate to slidably move back and forth on the second plate, comprising:
a first torsion spring and a second torsion spring, each torsion spring having a first end portion, a second end portion and a plurality of spring coils formed therebetween,
wherein the first and second end portions of each torsion spring are attached to the first and second plates at predetermined positions, respectively, and wherein the first torsion spring and the second torsion spring are configured to drive the first plate to slide along the second plate as the first plate moves a predetermined range along the second plate.

26. The sliding-type mechanism as claimed in claim 25, wherein the plurality of spring coils of each torsion spring is formed spaced-evenly between the first end portion and second end portion of the torsion spring, and wherein each spring coil is formed in a ring form.

27. The sliding-type mechanism as claimed in claim 26, wherein the plurality of spring coils of each torsion spring is arranged in a zigzag form.

28. A portable electronic device comprising at least one sliding-type mechanism as claimed in claim 25, wherein the portable electronic device further comprises a first housing and a second housing, and wherein the at least one sliding-type mechanism engaged with the first and second housings and configured to drive the second housing to slide relative to the first housing.
